# EUROPÄISCHE PATENTANMELDUNG

(11) **EP 0 997 813 A2**
(43) Veröffentlichungstag der Anmeldung: **03.05.2000**
(21) Anmeldenummer: 99203509.7
(22) Anmeldetag: 25.10.1999
(51) Int. Cl.: G06F 5/06

(54) **Schaltungsanordnung zum Verarbeiten binärer Signale**

(30) Priorität: 29.10.1998 DE 19849909
(71) Anmelder: Philips Corporate Intellectual Property GmbH, 52064 Aachen (DE); Koninklijke Philips Electronics N.V., 5621 BA Eindhoven (NL)
(72) Erfinder: Muth, Matthias, 22335 Hamburg (DE)
(74) Vertreter: Peters, Carl Heinrich, Dipl.-Ing.

(57) **Zusammenfassung**

Beschrieben wird eine Schaltungsanordnung zum Verarbeiten binärer Signale, umfassend
- wenigstens eine Logikanordnung zum Abgeben je wenigstens eines binären Ausgangssignals und
- zu jeder Logikanordnung je wenigstens eine Speicheranordnung zum Speichern des binären Ausgangssignals bzw. der binären Ausgangssignale zu durch ein in zyklischer Folge auftretende Zustandswechsel aufweisendes Taktsignal vorgegebenen Zeitpunkten,
- worin wenigstens eine der Speicheranordnungen eine Anzahl von Speicherzellen mit je einem Ausgang aufweist, von denen je eine zum Zeitpunkt eines ihr zugeordneten Zustandswechsels innerhalb jedes der Zyklen des Taktsignals den Augenblickswert je eines der binären Ausgangssignale speichen und an ihrem Ausgang abgibt, und daß die Ausgänge der Speicherzellen je einer der Speicheranordnungen mit einem gemeinsamen Ausgang dieser Speicheranordnung über eine Umschaltstufe verbunden sind, durch die der Ausgang jeder Speicherzelle im Zeitintervall beginnend mir dem zugeordneten Zustandswechsel des Taktsignals und endend mit dem nächsten Zustandswechsel des Taktsignals in der zyklischen Folge mit dem gemeinsamen Ausgang dieser Speicheranordnung verbunden wird.

Dadurch wird erreicht, daß, ausgehend von einer Anordnung, in der binäre Signale intern mir derselben Folgefrequenz verarbeitet werden, mir der ihre Ausgangssignale auftreten, für die Auslegung zum Betrieb mir einer gegenüber der Folgefrequenz der Ausgangssignale intern höheren Folgefrequenz wenigstens weitgehend unabhängig von der vorzunehmenden Signalverarbeitung eine einfache, schnelle und übersichtliche Konzipierung des Schaltungsaufbaus möglich ist.

## Beschreibung

Die Erfindung bezieht sich auf eine Schaltungsanordnung zum Verarbeiten binärer Signale.

In dem Aufsatz 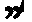 A VLSI System for Real-Time Linear Operations and Transforms", erschienen in IEEE Transactions on Signal Processing, Band 39, Heft 8, August 1991, Seiten 1914 bis 1917, ist ein VLSI-System zum Berechnen von Produkten von Vektormatrizen beschrieben, welches ein doppeltes Taktschema enthält, mit dem Schaltungseinheiten zu identischen Rechenoperationen im Multiplexbetrieb gesteuert werden können. Durch diese mehrfache Ausnutzung der Schaltungsteile wird schaltungsintern die höchstzulässige Arbeitsfrequenz für eine externe Datenbandbreite nutzbar gemacht, wodurch ein verbessertes Verhältnis zwischen der Signalverarbeitungskapazität und dem Schaltungsaufwand, bezogen auf die Kristallfläche in einer integrierten Schaltungsanordnung, erreicht wird. Es wird dort ein System beschrieben, bei dem eine interne Taktfrequenz viermal so hoch ist wie die Taktfrequenz der extern zugeführten Daten. In einem Beispiel beträgt die interne Taktfrequenz 40 MHz, die Frequenz aufeinem Ausgangsdatenbus dagegen nur 10 MHz.

Aus dem Tagungsband 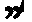 VLSI Signal Processing, III" publiziert in IEEE Press, New York, USA, 1988, Seiten 50 bis 60, 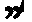 Speech Codec Architecture for Pan-European Digital Mobile Radio Using Bit-Serial Signal Processing", ist der Aufbau einer integrierten Schaltung zum Kodieren von Sprachsignalen bekannt, die insbesondere für den digitalen Mobilfunk eingesetzt werden soll. Der für diese Kodierung benutzte Algorithmus ist dabei in einer bitseriellen Schaltungsstruktur ohne programmierbare Teile verwirklicht. In dieser Schaltungsstruktur sind kritische Schaltungsteile zwischen verschiedenen Funktionsblöcken des Systems im Zeitmultiplex betrieben. Dadurch soll eine deutlich verringerte Kristallfläche für die Schaltung und eine verringerte Leistungsaufnahme erzielt werden. Der hier benutzte Zeitmultiplex arbeitet in der Weise, daß Schaltungsteile, die nur zeitweise benötigt werden, während der unbenutzten Zeit, die sich in der Regel kontinuierlich über mehrere Taktperioden erstreckt, von anderen Schaltungsteilen mit verwendet werden.

Die Erfindung hat die Aufgabe, eine Schaltungsanordnung der eingangs genannten Art in der Weise auszubilden, daß, ausgehend von einer Anordnung, in der binäre Signale intern mit derselben Folgefrequenz verarbeitet werden, mit der ihre Ausgangssignale auftreten, für die Auslegung zum Betrieb mit einer gegenüber der Folgefrequenz der Ausgangssignale intern höheren Folgefrequenz wenigstens weitgehend unabhängig von der vorzunehmenden Signalverarbeitung eine einfache, schnelle und übersichtliche Konzipierung des Schaltungsaufbaus möglich ist.

Erfindungsgemäß wird diese Aufgabe gelöst durch eine Schaltungsanordnung zum Verarbeiten binärer Signale, umfassend
- wenigstens eine Logikanordnung zum Abgeben je wenigstens eines binären Ausgangssignals und
- zu jeder Logikanordnung je wenigstens eine Speicheranordnung zum Speichern des binären Ausgangssignals bzw. der binären Ausgangssignale zu durch ein in zyklischer Folge auftretende Zustandswechsel aufweisendes Taktsignal vorgegebenen Zeitpunkten,
- worin wenigstens eine der Speicheranordnungen eine Anzahl von Speicherzellen mit je einem Ausgang aufweist, von denen je eine zum Zeitpunkt eines ihr zugeordneten Zustandswechsels innerhalb jedes der Zyklen des Taktsignals den Augenblickswert je eines der binären Ausgangssignale speichen und an ihrem Ausgang abgibt, und daß die Ausgänge der Speicherzellen je einer der Speicheranordnungen mit einem gemeinsamen Ausgang dieser Speicheranordnung über eine Umschaltstufe verbunden sind, durch die der Ausgang jeder Speicherzelle im Zeitintervall beginnend mit dem zugeordneten Zustandswechsel des Taktsignals und endend mit dem nächsten Zustandswechsel des Taktsignals in der zyklischen Folge mit dem gemeinsamen Ausgang dieser Speicheranordnung verbunden wird.

Die erfindungsgemäße Schaltungsanordnung ist derart aufgegliedert, daß Logikanordnung und Speicheranordnung bzw. -anordnungen funktional getrennt und bevorzugt auch räumlich voneinander abgegrenzt angeordnet sind. Bei einem Betrieb dieser Schaltungsanordnung, bei dem die interne Signalverarbeitung mit derselben Folgefrequenz, insbesondere innerhalb der Logikanordnung(en), erfolgt wie die Ausgabe der Ausgangssignale, kann die Speicheranordnung bzw. können die Speicheranordnungen in herkömmlicher Weise ausgebildet sein und werden interne Signalverarbeitung und Ausgangssignale bevorzugt mit derselben Taktfrequenz gesteuert.

Wird dagegen in der vorstehend beschriebenen Schaltungsanordnung anstelle der herkömmlichen Speicheranordnung(en) eine Speicheranordnung entsprechend der vorliegenden Erfindung eingesetzt, ist ohne zusätzliche Umgestaltungen ein Betrieb möglich, bei dem während je eines der Zyklen des Taktsignals eine der Anzahl der Zustandswechsel des Taktsignals innerhalb je eines der Zyklen entsprechende Anzahl von Signalverarbeitungsschritten durchgeführt werden kann. Die aus diesen einzelnen Verarbeitungsschritten innerhalb eines Zyklus resultierenden Werte des Ausgangssignals bzw. der Ausgangssignale der Logikanordnung(en) werden in je einer der Speicherzellen der Speicheranordnung(en) gespeichert. Auf diese Weise kann die Logikanordnung innerhalb eines Zyklus des Taktsignals mehrfach ausgenutzt werden. Damit kann Schaltungsaufwand eingespart werden, da die Logikanordnung(en) nicht mehr in je der der Anzahl der Zustandswechsel innerhalb eines Zyklus des Taktsignals entsprechenden Anzahl parallel vorgesehen werden muß bzw. müssen.

Eine besonders deutliche Ersparnis an Schaltungsaufwand ergibt sich bei Schaltungsanordnungen, bei denen die Logikanordnung(en) im Vergleich zu der Speicheranordnung bzw. den Speicheranordnungen sehr umfangreich ist bzw. sind. Eine doppelte Ausnutzung der Logikanordnung(en) kann in diesem Fall einen hohen Prozentsatz an Bauelementen, vorzugsweise an Kristallfläche bei integrierten Schaltungen, einsparen, da die nach der Erfindung ausgestaltete(n) Speicheranordnung(en) nur geringen Schaltungsaufwand erfordert bzw. erfordern. Weist eine solche Schaltungsanordnung mehrere Logikanordnungen und mehrere Speicheranordnungen auf, wird das erfindungsgemäße Prinzip aufmöglichst viele dieser Speicheranordnungen angewendet, um eine möglichst weitgehende Ersparnis zu erreichen.

Eine besonders einfache Ausgestaltung der erfindungsgemäßen Schaltungsanordnung ergibt sich dadurch, daß wenigstens der Speicheranordnungen zwei Speicherzellen aufweist, die als D-Flipflops ausgebildet sind und denen ein wenigstens nahezu rechteckförmiges Signal als Taktsignal an ihren Takteingängen zuführbar ist, wobei ein erstes der D-Flipflops der Speicheranordnung(en) mit der ansteigenden Flanke und das zweite der D-Flipflops mit der abfallenden Flanke zum Speichern gesteuert werden und die Umschaltstufe entsprechend den Pegeln des Taktsignals zwischen den Zustandswechseln gesteuert wird.

Mit einer derart ausgestalteten Schaltungsanordnung ergibt sich die Möglichkeit, die Folgefrequenz der internen Signalverarbeitung aufdas Doppelte der Taktfrequenz zu erhöhen, wobei lediglich anstelle üblicher Speicheranordnungen diejenigen gemäß der Erfindung einzusetzen sind. Es können zwei Signalwerte in jedem Zyklus des Taktsignals unabhängig voneinander verarbeitet werden. Insbesondere können in einer Logikanordnung zwei voneinander völlig unabhängige binäre Signale verarbeitet und in den beiden Speicherzellen der Speicheranordnung(en) ohne gegenseitige Beeinflussung gespeichert werden.

Bevorzugt sind die Augenblickswerte der binären Ausgangssignale zu den Zeitpunkten einander entsprechender Zustandswechsel in aufeinander folgenden Zyklen des Taktsignals je einem gesonderten Datenstrom zugeordnet. Die Erfindung ermöglicht nämlich in besonders einfacher Weise, diese gesonderten Datenströme Bit für Bit zeitlich verschachtelt innerhalb jedes der Zyklen des Taktsignals ohne gegenseitige Beeinflussung durch dieselbe(n) Logikanordnung(en) zu bearbeiten. Insbesondere wird für die Bearbeitung zweier verschachtelter Datenströme Bit für d.h. für die Verarbeitung zweier binärer Signale Augenblickswert für Augenblickswert, ein erster der Datenströme derart verarbeitet, daß seine Augenblickswerte während der ansteigenden Flanken des Taktsignals gespeichert werden, wohingegen die Augenblickswerte des zweiten Signals während der abfallenden Flanken des Taktsignals gespeichert werden.

Bei der erfindungsgemäßen Schaltungsanordnung erscheinen die verarbeiteten Datenströme bitverschachtelt am gemeinsamen Ausgang der Umschaltstufe bzw. an den gemeinsamen Ausgängen der Umschaltstufen zur Weiterverarbeitung in gleicher Weise.

Die binären Signale können jedoch an einem solchen gemeinsamen Ausgang jederzeit durch einen durch das Taktsignal einfach zu steuernden Demultiplexvorgang auseinander gefädelt werden. Dies ermöglicht in sehr einfacher Weise eine Verbindung einer seriellen Bearbeitung der Signale und ihrer parallelen Ausgabe.

Die Erfindung ist sehr vielseitig für Erzeugnisse aller Art zur elektronischen Verarbeitung von Daten einsetzbar. In einer beispielhaften Anwendung für das Steuerwerk eines 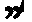 Controller Area Network" (CAN) konnte die Folgefrequenz der seriellen Datenverarbeitung bei einem schaltungstechnischen Mehraufwand von lediglich 7,5 % verdoppelt werden.

Ausführungsbeispiele der Erfindung sind in der Zeichnung dargestellt und werden im nachfolgenden näher beschrieben. Es zeigen
Fig. 1 eine Schaltungsanordnung zum Verarbeiten binärer Signale mit einer Logikanordnung und einer Speicheranordnung,
Fig. 2 eine Abwandlung der Schaltungsanordnung nach Fig. 1 mit einer erfindungsgemäßen Ausbildung der Speicheranordnung,
Fig. 3 die zeitlichen Verläufe einiger Signale in der Schaltungsanordnung nach Fig. 1,
Fig. 4 die zeitlichen Verläufe einiger Signale in der Schaltungsanordnung nach Fig. 2,
Fig. 5 eine Erweiterung der Schaltungsanordnung nach Fig. 1 und
Fig. 6 eine Abwandlung der Schaltungsanordnung nach Fig. 5 mit einer erfindungsgemäßen Ausbildung der darin enthaltenen Speicheranordnungen.

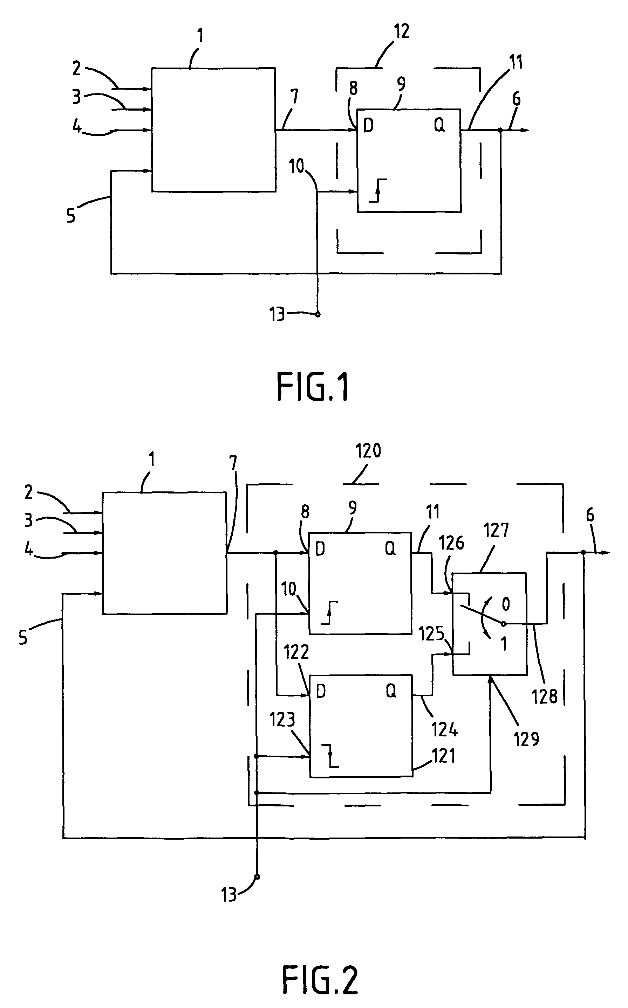

In der Schaltungsanordnung nach Fig. 1 ist mit dem Bezugszeichen 1 eine Logikanordnung bezeichnet, die vorzugsweise kominatorische Logikbausteine, jedoch keine taktabhängigen, ein Signal speichernden Elemente umfaßt. Die Logikanordnung 1 weist beispielsweise drei Eingänge 2, 3, 4 auf, über die binäre Signale zugeführt werden können, die auf beliebige Weise in der Logikanordnung 1 verarbeitet, d.h. verknüpft werden. Im Beispiel nach Fig. 1 weist die Logikanordnung 1 noch einen weiteren Eingang 5 auf, über den ihr von einem gemeinsamen Ausgang 6 der Schaltungsanordnung ein dort anliegendes, binäres Ausgangssignal rückgekoppelt wird, welches ebenfalls in die genannten Verknüpfungen einbezogen ist. Aus diesen Verknüpfungen resultiert ein binäres Ausgangssignal, welches an einem Ausgang 7 der Logikanordnung 1 abgegeben und einem Signaleingang 8 einer Speicherzelle 9 zugeführt wird. Die Speicherzelle 9 ist im Beispiel nach Fig. 1 als D-Flipflop ausgebildet. Dieses weist einen Takteingang 10 auf; dem im Betrieb ein wenigstens weitgehend rechteckförmiges Taktsignal zuleitbar ist. In diesem Taktsignal bilden die ansteigenden und die abfallenden Flanken in zyklischer Folge auftretende Zustandswechsel; ein Zyklus des Taktsignals entspricht einer Periodendauer desselben. Die Speicherzelle 9 ist derart ausgebildet, daß mit jeder ansteigenden Flanke des Taktsignals der Augenblickswert des über den Signaleingang 8 zugeführten binären Ausgangssignal der Logikanordnung 1 gespeichert und an einem Ausgang 11 der Speicherzelle 9 bis zum Auftreten der nächsten ansteigenden Flanke im Taktsignal abgegeben wird. Im Beispiel nach Fig. 1 bildet die Speicherzelle 9 eine Speicheranordnung 12.

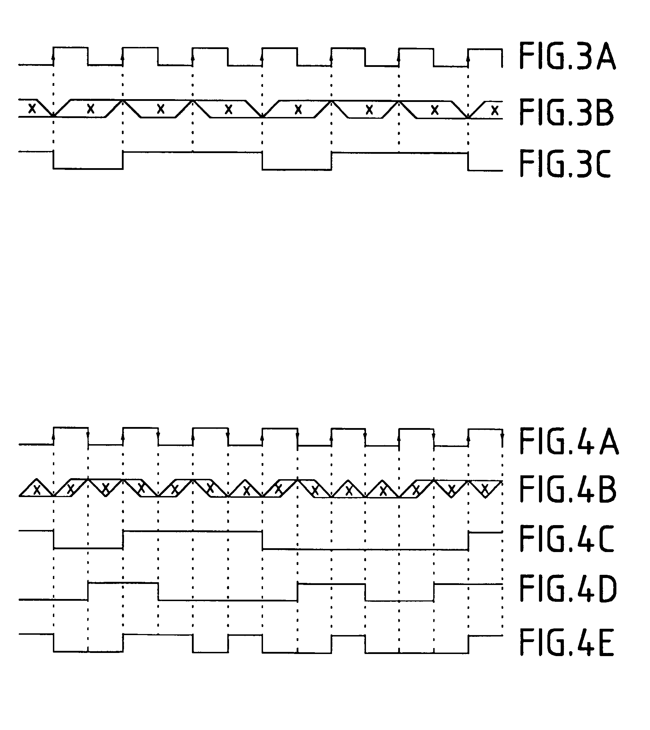

In Fig. 3 ist die Funktionsweise der Schaltungsanordnung nach Fig. 1 anhand eines beispielhaften Signalverlaufs über der Zeit dargestellt. Fig. 3a) zeigt dabei den Verlauf des rechteckförmig ausgebildeten Taktsignals am Takteingang 10 der Speicherzelle 9, und in Fig. 3b) ist das binäre Ausgangssignal am Ausgang 7 der Logikanordnung 1 dargestellt. Dieses binäre Ausgangssignal gemäß Fig. 3b), gebildet durch Verknüpfung der binären Signale an den Eingängen 2 bis 5, kann in den Zeitintervallen zwischen je zwei ansteigenden Flanken des Taktsignals nach Fig. 3a) seinen Zustand wechseln oder beibehalten, je nach den Änderungen in den binären Signalen an den Eingängen 2 bis 5. Für eine fehlerfreie Funktionsweise ist es wie üblich erforderlich, daß Einstell- bzw. Einschwingvorgänge in der Logikanordnung 1 zu den jeweiligen Abtastzeitpunkten durch die Speicherzelle 9, d.h. zu den durch die ansteigenden Flanken des Taktsignals gebildeten Zustandswechseln dieses Taktsignals abgeklungen sind, so daß das binäre Ausgangssignal am Ausgang 7 der Logikanordnung 1 einen definierten Wert angenommen hat. Bei dem beispielhaft angenommenen zeitlichen Verlauf dieses binären Ausgangssignals am Ausgang 7 der Logikanordnung 1 gemäß Fig. 3b) ergibt sich am Ausgang 11 der Speicherzelle 9 und damit am gemeinsamen Ausgang 6 ein Signalverlauf für das binäre Ausgangssignal am Ausgang 11 der Speicherzelle 9 und damit am gemeinsamen Ausgang 6, wie er in Fig. 3c) dargestellt ist.

Die Schaltungsanordnung nach Fig. 1 wird somit für einen einzigen Datenstrom verwendet. Sind mir derartig ausgebildeten Schaltungsanordnungen zwei voneinander unabhängige Datenströme durch identische logische Verknüpfungen zu bearbeiten, müßte eine zweite, der Fig. 1 identische Anordnung aus Logikanordnung und Speicheranordnung vorgesehen werden.

Um diesen erhöhten Schaltungsaufwand zu umgehen, wird die Schaltungsanordnung nach Fig. 1 entsprechend dem Ausführungsbeispiel nach Fig. 2 abgewandelt. Darin sind übereinstimmende Elemente mir identischen Bezugszeichen versehen.

In der Schaltungsanordnung nach Fig. 2 ist die Speicheranordnung 12 durch eine Speicheranordnung 120 ersetzt worden. Die Speicheranordnung 120 umfaßt außer der bereits beschriebenen Speicherzelle 9 eine weitere Speicherzelle 121, deren Signaleingang 122 gemeinsam mit dem Signaleingang 8 der (ersten) Speicherzelle 9 an den Ausgang 7 der Logikanordnung 1 angeschlossen ist. Ein Takteingang 123 der weiteren Speicherzelle 121 ist gemeinsam mit dem Takteingang der (ersten) Speicherzelle 9 an eine Taktleitung 13 geführt, aus der auch in der Schaltungsanordnung nach Fig. 1 das Taktsignal für die Speicherzelle 9 entnommen werden kann. Die weitere Speicherzelle 121 ist gegenüber der (ersten) Speicherzelle 9 in der Weise abgewandelt, daß der Speichervorgang in ihr mir der abfallenden Flanke des Taktsignals vorgenommen wird. Ein Ausgang 124 der weiteren Speicherzelle 121 sowie der Ausgang 11 der (ersten) Speicherzelle 9 sind ferner an je einen Eingang 125 bzw. 126 einer Umschaltstufe 127 geführt. Deren Ausgang 128 ist mit dem gemeinsamen Ausgang 6 der Schaltungsanordnung verbunden. Ein Steuereingang 129 der Umschaltstufe 127 ist mit der Taktleitung 13 verbunden. Die Umschaltstufe 127 stellt, gesteuert durch das Taktsignal am Steuereingang 129, eine Verbindung zwischen dem (ersten) Eingang 125 und dem Ausgang 128 her, wenn das Taktsignal einen hohen logischen Pegel annimmt und sie stellt eine Verbindung zwischen dem (zweiten) Eingang 126 und dem Ausgang 128 her, wenn das Taktsignal einen niedrigen logischen Pegel annimmt. Durch die Zustandswechsel im Taktsignal wird somit die Umschaltstufe 127 zyklisch umgeschaltet.

Fig. 4 zeigt an einem Beispiel die Funktionsweise der Schaltungsanordnung nach Fig. 2. In Fig. 4a) ist wieder das gegenüber den Fig. 1 und 3 unveränderte Taktsignal aufgetragen. Fig. 4b) zeigt beispielhaft einen Verlaufeines binären Ausgangssignals am Ausgang 7 der Logikanordnung 1. Dieses binäre Ausgangssignal enthält die seriellen Datenwerte zweiter zeitlich verschachtelter Datenströme. Dabei sind die Datenwerte eines ersten der Datenströme den durch die ansteigenden Flanken des Taktsignals dargestellten Zustandswechsel zugeordnet, wohingegen die Datenwerte des zweiten Datenstromes den durch die abfallenden Flanken des Taktsignals gebildeten Zustandswechsel zugeordnet sind. Da die Speicherung in der (ersten) Speicherzelle 9 mit der ansteigenden Flanke des Taktsignals und die Speicherung in der weiteren Speicherzelle 121 mit der abfallenden Flanke des Taktsignals vorgenommen wird, erfolgt in den Speicherzellen 9, 121 eine nach Datenströmen getrennte Speicherung der über den Ausgang 7 der Logikanordnung 1 zugeführten Datenwerte, nämlich eine Speicherung des ersten Datenstromes in der (ersten) Speicherzelle 9 und eine Speicherung des zweiten Datenstromes in der weiteren Speicherzelle 121. Die daraus resultierenden Signale sind in Fig. 4 ebenfalls dargestellt, und zwar zeigt Fig. 4c) den ersten Datenstrom als binäres Ausgangssignal am Ausgang 11 der (ersten) Speicherzelle 9, und Fig. 4d) den zweiten Datenstrom als binäres Ausgangssignal am Ausgang 124 der weiteren Speicherzelle 121. Die Einstell- bzw. Einschwingvorgänge im binären Ausgangssignal am Ausgang 7 der Logikanordnung 1 sind in Fig. 4b) in einer zu Fig. 3b) entsprechenden Weise dargestellt. Es ist zu erkennen, daß für diese Ausgleichs- bzw. Einschwing- oder Einstellvorgänge anstelle einer gesamten Periode des Taktsignals nur noch jeweils eine halbe Periode des Taktsignals zur Verfügung steht. Diese verkürzte Einstell- bzw. Einschwingzeit bildet jedoch die einzige Anforderung, die bei der erfindungsgemäßen Ausbildung der Schaltungsanordnung an die Logikanordnung zu stellen ist. Die Frequenz des Taktsignals wird dagegen nicht verändert.

Durch die Umschaltstufe 127 werden nun entsprechend dem jeweiligen Zustand des Taktsignals auf der Taktleitung 13 zwischen den einzelnen, zyklisch wiederkehrenden Zustandswechseln die Datenströme an den Ausgängen 11 und 124 der Speicherzellen 9 und 121 erneut zeitlich verschachtelt. Dadurch entsteht der in Fig. 4e) dargestellte zeitliche Verlauf des binären Ausgangssignals am gemeinsamen Ausgang 6 der Schaltungsanordnung in Fig. 2. In diesem binären Ausgangssignal sind die Datenströme in derselben Weise zeitlich verschachtelt, in der sie bereits in der Logikanordnung 1 bearbeitet worden sind. Dadurch ist einerseits eine Rückführung an den weiteren Eingang 5 der Logikanordnung 1 ohne zusätzliche Schaltungsmaßnahmen möglich, andererseits können an den gemeinsamen Ausgang 6 der Schaltungsanordnung weitere Signalverarbeitungsstufen, z.B. weitere Logikanordnungen, in der gleichen Weise angeschlossen werden, wie dies bei der Schaltungsanordnung nach Fig. 1 für die Bearbeitung eines einfachen Datenstromes vorgenommen würde. Bei einer solchen, erweiterten Schaltungsanordnung können somit alle Speicheranordnungen, die in der Form der Speicheranordnung 12 aufgebaut sind, durch Speicheranordnungen entsprechend der Speicheranordnung 120 in Fig. 2 ersetzt werden. Ohne weitere Änderungen in auch diesen umfangreicheren Schaltungsanordnungen sind dieselben dann für die zeitlich verschachtelte Verarbeitung zweier Datenströme einsetzbar. Die Speicherzellen selbst werden dabei nicht einer höheren Folgefrequenz der zu speichernden Datenwerte ausgesetzt, als dies für die Verarbeitung eines einfachen Datenstromes der Fall ist.

Sollen in einer Anordnung gemäß Fig. 2 die Datenströme über getrennte Ausgänge abgegeben werden, kann dies in einfacher Weise dadurch geschehen, daß in einer Speicheranordnung gemäß der Speicheranordnung 120 nach Fig. 2 die Umschaltstufe 127 entfällt. Statt dessen werden die Ausgänge 11 bzw. 124 der Speicherzellen 9 bzw. 121 parallel herausgeführt. Die Trennung der Datenströme ist somit ohne zusätzliche Demultiplexeranordnung sehr einfach möglich.

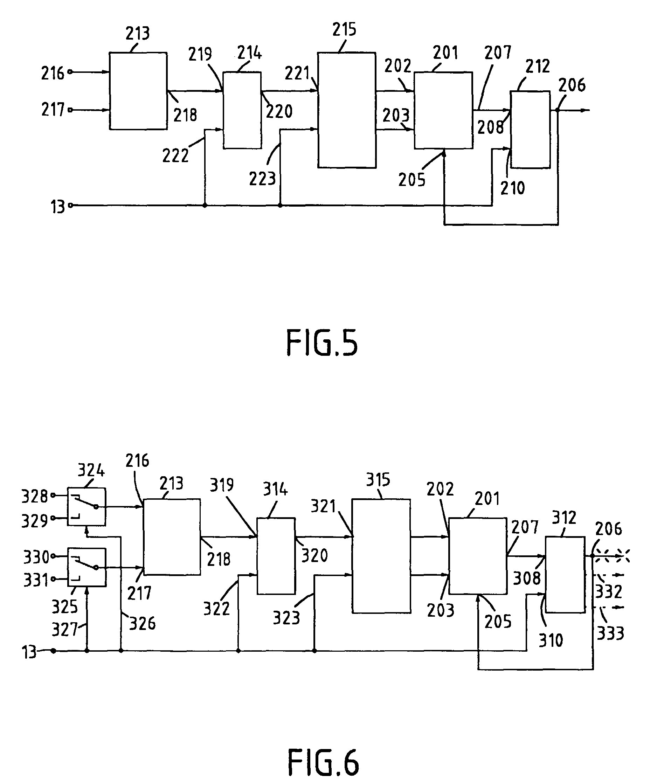

Ein Beispiel für eine derartige, umfangreichere Schaltungsanordnung zeigt Fig. 5. Darin bezeichnet 201 eine entsprechen der Logikanordnung 1 aufgebaute Logikanordnung mit Eingängen 202, 203 und 205 sowie einem Ausgang 207, die den Eingängen 2, 3, 5 und dem Ausgang 7 der Logikanordnung 1 in Fig. 1 entsprechen. Damit verbunden ist eine Speicheranordnung 212, die entsprechend der Speicheranordnung 12 in Fig. 1 aufgebaut ist und die einen Signaleingang 208, einen Takteingang 210 und einen Ausgang aufweist, der mit einem gemeinsamen Ausgang 206 der Schaltungsanordnung verbunden ist. Diese, im Aufbau der Fig. 1 entsprechende Anordnung ist nach Fig. 5 um eine weitere Logikanordnung 213, eine weitere Speicheranordnung 214 und einen

Schaltungsblock 215 erweitert. Die weitere Logikanordnung 213 weist zwei Eingänge 216, 217 auf, denen binäre Signale zur logischen Verknüpfung innerhalb der weiteren Logikanordnung 213 zugeführt werden können. Ein aus dieser Verknüpfung resultierendes binäres Ausgangssignal der weiteren Logikanordnung 213 wird an einem Ausgang 218 dieser weiteren Logikanordnung 213 abgegeben und zur Speicherung der weiteren Speicheranordnung 214 an ihrem Signaleingang 219 zugeleitet. Das in der weiteren Speicheranordnung 214 gespeicherte binäre Signal wird von ihr an einem Ausgang 220 abgegeben und dem Schaltungsblock 215 an dessen Eingang 221 zugeleitet. Ein Takteingang 222 der weiteren Speicheranordnung 214 ist, wie der Takteingang 210 der Speicheranordnung 212, mit der Taktleitung 13 verbunden.

Der Schaltungsblock 215 im Beispiel nach Fig. 5 kann noch weitere Logikanordnungen, aber auch Speicheranordnungen enthalten. Zu deren Steuerung ist er mit einem Takteingang 223 versehen, der ebenfalls mit der Taktleitung 13 verbunden ist. In einem bevorzugten Ausführungsbeispiel enthält der Schaltungsblock 215 den sogenannten 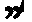 Protocol Core" eines 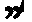 Controller Area Network".

Im Beispiel nach Fig. 5 sind von diesem Schaltungsblock 205 unmittelbar Verbindungen an die Eingänge 202, 203 der Logikanordnung 201 geführt.

In Fig. 6 ist eine Abwandlung der Schaltungsanordnung nach Fig. 5 dargestellt, in der zunächst entsprechend der Variation der Fig. 1 gemäß der Fig. 2 alle einfachen Speicheranordnungen, die der Speicheranordnung 12 in Fig. 1 entsprechen, durch Speicheranordnungen in der Form der Speicheranordnung 120 nach Fig. 2 ersetzt worden sind. Demgemäß tritt an die Stelle der in Fig. 5 eingesetzten Speicheranordnung 212 in Fig. 6 eine Speicheranordnung 312, die im Aufbau der Speicheranordnung 120 aus Fig. 2 entspricht. Diese Speicheranordnung 312 weist einen Signaleingang 308 und einen Takteingang 310 auf. Diese treten in Fig. 6 an die Stelle des Signaleingangs 208 bzw. des Takteingangs 210. Die weitere Speicheranordnung 214 in Fig. 5 ist in Fig. 6 ersetzt durch eine weitere Speicheranordnung 314, die ebenfalls einen Aufbau gemäß der Speicheranordnung 120 in Fig. 2 aufweist. Außerdem werden auch im Schaltungsblock 215 vorhandene Speicheranordnungen durch Speicheranordnungen gemäß der Speicheranordnung 120 ersetzt. Der so abgewandelte Schaltungsblock trägt in Fig. 6 das Bezugszeichen 315. Seine Ausgänge sind mit den Eingängen 202, 203 der Logikanordnung 201, sein Eingang 321 ist mit einem Ausgang 320 der weiteren Speicheranordnung 314 und sein Takteingang 323 ist mit der Taktleitung 13 verbunden. Die weitere Speicheranordnung 314 ist mit ihrem Signaleingang 319 an den Ausgang 218 der weiteren Logikanordnung 213 und mit ihrem Takteingang an die Taktleitung 13 angeschlossen. Somit sind beim Übergang von der Fig. 5 zur Fig. 6 lediglich die Speicheranordnungen auszutauschen, um von der Verarbeitung eines einfachen Datenstroms zur Ermöglichung der zeitverschachtelten Verarbeitung zweier Datenströme überzugehen.

Sollen diese Datenströme aus einer getrennten Zuführung zeitverschachtelt den Eingängen 216, 217 der weiteren Logikanordnung 213 zugeführt werden, sind diesen Eingängen 216, 217 je eine weitere Umschaltstufe 324, 325 vorzuschalten, die in ihrem Aufbau der Umschaltstufe 127 aus der Speicheranordnung 120 in Fig. 2 entsprechen. Auch die weiteren Umschaltstufen 324, 325 werden mit ihren Steuereingängen 326 bzw. 327 an die Taktleitung 13 angeschlossen. Die erste weitere Umschaltstufe 324 verbindet in ihrem ersten Schaltzustand bei niedrigem logischem Zustand des Taktsignals einen Eingangsanschluß 328 für ein erstes binäres Signal eines ersten Datenstroms mit dem ersten Eingang 216 der weiteren Logikanordnung 213. In einem entsprechenden Schaltzustand verbindet die zweite weitere Umschaltstufe 325 einen Eingangsanschluß 330 für ein zweites binäres Signal des ersten Datenstromes mit dem zweiten Eingang 217 der weiteren Logikanordnung 213. Nimmt das Taktsignal dagegen seinen hohen logischen Zustand an, schalten auch die weiteren Umschaltstufen 324, 325 in ihre anderen Schaltzustände um, in denen ein Eingangsanschluß 329 für ein erstes binäres Signal eines zweiten Datenstromes mir dem ersten Eingang 216 der weiteren Logikanordnung 213 verbunden wird, wohingegen ein Eingangsanschluß 331 für ein zweites binäres Signal des zweiten Datenstromes mit dem zweiten Eingang 217 der weiteren Logikanordnung 213 verbunden wird. Auf diese Weise werden die Datenströme, in denen die Folgefrequenz der Datenwerte der Frequenz des Taktsignals entspricht, Datenwert für Datenwert zeitverschachtelt der weiteren Logikanordnung 213 zugeleitet. In dieser verschachtelten Form werden sie von der Schaltungsanordnung bis zum gemeinsamen Ausgang 206 hin weiter verarbeitet.

In einer Abwandlung der Schaltungsanordnung nach Fig. 6 können zusätzlich zu dem mit dem gemeinsamen Ausgang 206 verbundenen Ausgang der in dieser Speicheranordnung 312 enthaltenen Umschaltstufe auch die Ausgänge der darin enthaltenen Speicherzellen als zusätzliche Ausgänge herausgeführt werden. Dies ist in Fig. 6 durch gestrichelte Linien angedeutet; die Ausgänge der Speicherzellen sind darin mit den Bezugszeichen 332, 333 bezeichnet. Beispielsweise entspricht der Ausgang 332 dem Ausgang der Speicherzelle für den ersten Datenstrom entsprechend dem Ausgang 11 der (ersten) Speicherzelle 9 in der Speicheranordnung 120 nach Fig. 2, wohingegen der Ausgang 333 für den zweiten Datenstrom den Ausgang der dafür vorgesehenen zweiten Speicherzelle in der Speicheranordnung 312 bildet, entsprechend dem Ausgang 124 der weiteren Speicherzelle 121 der Speicheranordnung 120 in Fig. 2. Bei dieser Abwandlung der Speicheranordnung 312 werden somit die Datenströme zur Ausgabe getrennt. Demgemäß dient der gemeinsame Ausgang 206 nur noch der Rückkopplung des zeitlich verschachtelten Ausgangssignals an den Eingang 205 der Logikanordnung 201 und nicht mehr zur Ausgabe eines binären Ausgangssignals der gesamten Schaltungsanordnung, was durch die gestrichelten Kreuze in Fig. 6 angedeutet ist.

## Patentansprüche

1. Schaltungsanordnung zum Verarbeiten binärer Signale, umfassend
- wenigstens eine Logikanordnung zum Abgeben je wenigstens eines binären Ausgangssignals und
- zu jeder Logikanordnung je wenigstens eine Speicheranordnung zum Speichern des binären Ausgangssignals bzw. der binären Ausgangssignale zu durch ein in zyklischer Folge auftretende Zustandswechsel aufweisendes Taktsignal vorgegebenen Zeitpunkten,
- worin wenigstens eine der Speicheranordnungen eine Anzahl von Speicherzellen mit je einem Ausgang aufweist, von denen je eine zum Zeitpunkt eines ihr zugeordneten Zustandswechsels innerhalb jedes der Zyklen des Taktsignals den Augenblickswert je eines der binären Ausgangssignale speichen und an ihrem Ausgang abgibt, und daß die Ausgänge der Speicherzellen je einer der Speicheranordnungen mit einem gemeinsamen Ausgang dieser Speicheranordnung über eine Umschaltstufe verbunden sind, durch die der Ausgang jeder Speicherzelle im Zeitintervall beginnend mit dem zugeordneten Zustandswechsel des Taktsignals und endend mir dem nächsten Zustandswechsel des Taktsignals in der zyklischen Folge mit dem gemeinsamen Ausgang dieser Speicheranordnung verbunden wird.

2. Schaltungsanordnung nach Anspruch 1, dadurch gekennzeichnet,
daß wenigstens der Speicheranordnungen zwei Speicherzellen aufweist, die als D-Flipflops ausgebildet sind und denen ein wenigstens nahezu rechteckförmiges Signal als Taktsignal an ihren Takteingängen zuführbar ist, wobei ein erstes der D-Flipflops der Speicheranordnung(en) mit der ansteigenden Flanke und das zweite der D-Flipflops mit der abfallenden Flanke zum Speichern gesteuert werden und die Umschaltstufe entsprechend den Pegeln des Taktsignals zwischen den Zustandswechseln gesteuert wird.

3. Schaltungsanordnung nach Anspruch 1 oder 2, dadurch gekennzeichnet,
daß die Augenblickswerte der binären Ausgangssignale zu den Zeitpunkten einander entsprechender Zustandswechsel in aufeinander folgenden Zyklen des Taktsignals je einem gesonderten Datenstrom zugeordnet sind.

4. Erzeugnis zur elektronischen Verarbeitung von Daten, gekennzeichnet durch
eine Schaltungsanordnung nach einem der vorhergehenden Ansprüche.
